Europäisches Patentamt

European Patent Office

Office européen des brevets

(19)

(11) Veröffentlichungsnummer: **0 377 821**

**A1**

(12) **EUROPÄISCHE PATENTANMELDUNG**

(21) Anmeldenummer: **89122158.2**

(22) Anmeldetag: **01.12.89**

(51) Int. Cl.5: **G11B 5/706, C01G 49/00, C01G 51/00**

(30) Priorität: **14.12.88 DE 3842015**

(43) Veröffentlichungstag der Anmeldung: **18.07.90 Patentblatt 90/29**

(84) Benannte Vertragsstaaten: **DE FR GB IT**

(71) Anmelder: **BAYER AG**

**D-5090 Leverkusen 1 Bayerwerk(DE)**

(72) Erfinder: **Meisen, Ulrich, Dr.**
**Breslauer Strasse 31**
**D-4150 Krefeld 11(DE)**
Erfinder: **Woditsch, Peter, Dr.**
**Deswatinesstrasse 83**
**D-4150 Krefeld(DE)**

(54) **Verfahren zur Herstellung feinteiliger magnetischer Hexaferrite durch Sprühtrocknen von Bariumsalzen mit Eisenoxiden sowie die Verwendung so erhaltener Hexaferrite.**

(57) Die vorliegende Erfindung betrifft ein Verfahren zur Herstellung feinteiliger magnetischer Hexaferrite der allgemeinen Zusammensetzung

$M(I)_{1-x}M(II)_yM(III)_zFe_{12-(y+z)}O_{19}$ wobei

$0 < = x < = 0,5,\quad 0 < = (y+z)\quad < = 3,\quad 0 < = y < = 1,5,$
$0 < = z < = 1,5$ und $(x+y+z) > = 1,0$

M(I) = Ba, Sr, Ca, Eu, Pb oder eine Kombination von RE und einwertigen Kationen der Gruppe Li, Na, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W

bedeuten sowie die Verwendung dieser Hexaferritpigmente in magnetischen Aufzeichnungsmedien, sicherheitsmarkierungen, Markierungen von Banknoten, Transferbändern und Tickets.

EP 0 377 821 A1

## Verfahren zur Herstellung feinteiliger magnetischer Hexaferrite durch Sprühtrocknen von Bariumsalzen mit Eisenoxiden sowie die Verwendung so erhaltener Hexaferrite

Die vorliegende Erfindung betrifft ein Verfahren zur Herstellung feinteiliger magnetischer Hexaferrite der allgemeinen Zusammensetzung

$M(I)_{1-x}M(II)_yM(III)_zFe_{12-(y+z)}O_{19}$ wobei

$0 <= x <= 0{,}5$, $0 <= (y+z) <= 3$, $0 <= y <= 1.5$, $0 <= z <= 1.5$ und $(x+y+z) >= 1.0$

M(I) = Ba, Sr, Ca, Eu, Pb oder eine Kombination von RE und einwertigen Kationen der Gruppe Li, Na, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W

bedeuten

sowie die Verwendung dieser Hexaferritpigmente in magnetischen Aufzeichnungsmedien, Sicherheitsmarkierungen, Markierungen von Banknoten, Transferbändern und Tickets.

Hexaferrite weisen Koerzitivfeldstärken auf, wie sie für die hochdichte magnetische Speicherung benötigt werden (45-120 kA/m). Insbesondere zeichnen sie sich durch eine durch Metalldotierung variabel einstellbare Koerzitivkraft ($_iH_c$) im Bereich von 500-5500 Oe (39.785-437.6 kA/m) aus. Sie sind Metallpigmente in ihrer Korrosionsstabilität und $CrO_2$ und Co-dotierten Eisenoxidpigmenten in ihrer Thermostabilität überlegen.

Derartige Hexaferritpigmente mit Magnetoplumbit(M)-Struktur wurden für oben genannte Zwecke vorgeschlagen. In der DE-A 3 732 116 wird beispielsweise die Verwendung eines Strontiumferrits zur Herstellung von Siebdruckfarben, die ein Bindemittel und ein magnetisierbares Pigment enthalten, beschrieben.

Für die Anwendung in Sicherheitsmarkierungen, beispielsweise auf Scheckkarten oder Banknoten, werden feinteilige gut dispergierbare magnetische Materialien benötigt, die eine derart hohe Koerzitivkraft aufweisen, daß sie durch übliche Permanentmagnete nicht gelöscht werden können. Für handelsübliche Tickets, beispielsweise Fahrkarten werden derzeit konventionelle magnetische Eisenoxide eingesetzt. Derartige Produkte sind jedoch aufgrund ihrer geringen Koerzitivkraft leicht mit kommerziell erhältlichen Permanentmagneten zu fälschen.

In fälschungssicheren magnetischen Medien wird die Verwendung gemahlener Hartferrite in der DE-A 3 630 113 und der DE-A 3 732 116 vorgeschlagen. Derartige Produkte weisen jedoch eine sehr breite Teilchengrößenverteilung auf. Sie bestehen teilweise aus derart großen Teilchen, daß die Größe von magnetischen Eindomänen überschritten wird. Das hat zur Folge, daß die Koerzitivkraft sinkt und ein aufgezeichnetes Signal verzerrt wiedergegeben wird. Weiterhin sind derart grobe Materialien nur sehr schwer und unter hohen Kosten (bedingt durch lange Mahldauer bei der Lackherstellung) zu verarbeiten.

Zur Herstellung von Banknoten mit feinen aufgedruckten magnetischen Wasserzeichen sind Hartferrite aufgrund ihrer zu hohen mittleren Teilchengröße ungeeignet.

Bisher sind die verschiedensten Verfahren zur Herstellung von Hexaferriten bekannt geworden. Bei dem Verfahren der Mischfällung, wie das in US-A 4 120 807 beschrieben ist, geht man von Lösungen von Metallsalzen aus, die durch NaOH oder $Na_2CO_3$ oder ähnliche Fällungsmittel gefüllt werden Da üblicherweise von Metallchloriden ausgegangen wird, ergeben sich erhebliche Korrosionsprobleme durch das hierbei entstehende NaCl, so daß das Verfahren schwierig durchführbar ist.

Weiterhin ist die Herstellung durch hydrothermale Verfahren, In US-A 4 585 568 beschrieben. Nachteil dieser Verfahren sind jedoch hohe Verfahrenskosten und geringer Durchsatz.

Es ist ebenfalls möglich, Bariumferrite durch Temperung in Salzschmelzen herzustellen, was aber mit erheblichen Korrosionsproblemen verbunden ist. Ein weiteres Verfahren geht von anorganischen Gläsern aus. Dieses in der US-A 4 341 648 beschriebene Verfahren, nach dem geeignete Hexaferrite erhalten werden können führt jedoch zu sehr hohen Verfahrenskosten, bedingt durch die hohen Schmelztemperaturen und durch Korrosionsprobleme als Folge der borhaltigen Schmelze.

Daneben sind einige weitere Verfahren bekannt geworden, von denen jedoch keines derzeit zur Darstellung feinteiliger Bariumhexaferrite einer definierten Teilchengröße und Form geeignet ist.

Versuche zur Auffällung von Barium auf verschiedene Eisenoxide führten bisher nicht zu geeigneten Hexaferriten, da das Barium nicht definiert auf den Teilchen vorlag und deshalb bei einem anschließenden Glühprozeß sich nicht mit Eisenoxid zu dem gewünschten Bariumhexaferrit umsetzte.

Es ist deshalb Ziel der Erfindung, ein Verfahren zur Herstellung eines preiswerten, gut dispergierbaren magnetischen Materials mit einer genügend hohen Koerzitivkraft herzustellen.

Überraschenderweise gelang es durch einfaches Mischen einer Suspension eines Eisenoxids, besonders bevorzugt eines Magnetits, mit einem wasserlöslichen Bariumsalz, anschließendes Sprühtrocknen und Glühen einen für die oben genannten Einsatzgebiete geeigneten Bariumferrit herzustellen.

Als wasserlösliche Bariumsalze können die handelsüblichen Nitrate, Chloride oder Hydroxide eingesetzt werden. Es ist jedoch möglich, jedes Bariumsalz mit einer genügend hohen Wasserlöslichkeit einzusetzen. Besonders bevorzugt verwendet werden Bariumverbindungen, die bei der anschließenden Glühung gasförmige leicht entfernbare Zersetzungsprodukte ergeben. Es kommen somit besonders bevorzugt Hydroxide, Sulfite und Nitrate in Frage, die sich bei den zur Herstellung des erfindungsgemäßen Bariumferrits notwendigen Temperaturen von mehr als 550 °C, zu leicht mit alkalischen Lösungen auswaschbaren Gasen zersetzen zur Anwendung. Ein geringer Bariumüberschuss, der zu einer Bildung der entsprechenden Menge Fe(II) statt Fe(IIII) führt, ist bei der Herstellung von hartmagnetischen Hexaferriten üblich und erwünscht.

Gegenstand der vorliegenden Erfindung ist somit ein Verfahren zur Herstellung feinteiliger magnetischer Hexaferrite der allgemeinen Zusammensetzung

$M(I)_{1-x}M(II)_yM(III)_zFe_{12-(y+z)}O_{19}$ wobei

$0 < = x < = 0,5$, $0 < = (y+z) < = 3$, $0 < = y < = 1.5$, $0 < = z < = 1.5$ und $(x+y+z) > = 1.0$, wobei

M(I) = Ba, Sr, Ca, Eu, Pb oder eine Kombination von RE und einwertigen Kationen der Gruppe Li, Na, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W

bedeuten, dadurch gekennzeichnet, daß der Hexaferrit durch Sprühtrocknen einer Mischung eines Bariumsalzes mit einem Eisenoxid und anschließendes Glühen hergestellt wird.

Hierbei werden vorzugsweise Eisenoxide einer definierten Form, insbesondere solche Eisenoxide, die sich durch Teilchendurchmesser von 0,01-1 mym und Teilchendicke von 0,01-1 mym, wobei Teilchendurchmesser und Teilchendicke annähernd gleich sind, als Ausgangsmaterialien verwendet. Es ist jedoch ebenfalls möglich, feinteiliges a-FeOOH, g-FeOOH oder a-$Fe_2O_3$ zur Herstellung der erfindungsgemäßen Hexaferrite einzusetzen. Eine besonders bevorzugte Ausführungsform des erfindungsgemäßen Verfahrens besteht darin, daß $Fe_3O_4$ durch Fällung hergestellt wird und ein Bariumsalz, besonders bevorzugt Bariumnitrat, Bariumhydroxid oder Bariumchlorid, mit einer Aufschlämmung des gefällten Magnetits homogen vermischt wird und diese Dispersion in einem Sprühtrockner unter Luft oder Schutzgas (wie z.B. Stickstoff oder Argon) bei Abgastemperaturen von mehr als 80 °C getrocknet wird.

Dieses gut fließfähige nicht staubende Pulver kann unmittelbar in einem Drehrohrofen kontinuierlich geglüht werden. Hierbei zersetzt sich das eingesetzte Bariumsalz zu Bariumoxid oder $BaCO_3$ und reagiert unmittelbar mit dem Eisenoxid zum gewünschten Hexaferrit.

Zur Herstellung des gewünschten feinteiligen Hexaferrits sind Glühtemperaturen von mehr als 550 °C notwendig. Die Glühung nach dem erfindungsgemäßen Verfahren erfolgt in der Regel unter Überleiten eines sauerstoffhaltigen Gases, besonders bevorzugt Luft. Der nach diesem Verfahren hergestellte Hexaferrit kann, wenn es erforderlich ist, unmittelbar nach der Glühung in einer kontinuierlichen Perlmühle gemahlen werden.

Zur Entfernung des üblicherweise im Überschuss eingesetzten Bariums ist es bei bestimmten Anwendungen erforderlich dieses Barium durch eine Behandlung mit einer verdünnten Säure, besonders bevorzugt 1-5 %ige Salpetersäure, wieder zu lösen. Diese Abfallsäure wird der Ausgangssuspension vor der Sprühtrocknung wieder zugeführt.

Anstelle von reinen Magnetiten oder anderen reinen Eisenoxiden können auch zur Einstellung der Koerzitivkraft des Bariumferrits mit Metallen dotierte Eisenoxide Verwendung finden. Des weiteren ist es leicht möglich, anstelle der wasserlöslichen Bariumsalze solche Elemente Sr, Ca, Pb, Eu oder einer Kombination von RE und einwertigen Kationen der Gruppe Li, Na, Rb, Cs, Ag, Tl und RE = La, Y, Sc, Bi oder andere Seltenerdmetalle zu verwenden.

Die entstandenen Hexaferritteilchen haben die Form des ursprünglichen Eisenoxidteilchens, so daß auf diese Weise sehr feinteilige Bariummferrite einer genau definierten Teilchenform mit sehr enger Teilchengrößenverteilung herstellbar sind. Aufgrund ihrer hervorragenden Eigenschaften sind diese feinteiligen Bariumhexaferrite besonders geeignet für den Einsatz in magnetischen Aufzeichnungsmedien, für Sicherheitsmarkierungen, Markierungen von Banknoten, Transferbändern und Tikkets.

Auch sind derartige feinteilige Bariumferrite für plastikgebundene Permanentmagnete oder Permanentmagnete beonders geeignet. Der besondere Vorteil des erfindungsgemäßen Verfahrens liegt in seiner hohen Wirtschaftlichkeit, da die eingesetzten Rohstoffe preiswert und in großer Menge verfügbar sind und die Umsetzungen in Standardapparaturen bei Standardbedingungen durchgeführt werden können. Im Gegensatz zu den meisten bisher beschriebenen Herstellverfahren zur Bariumhexaferrite, wird das erfindungsgemäße Verfahren kontinuierlich durchgeführt, was zu einer weiteren Senkung der Herstellkosten führt.

Die folgenden Beispiele sollen die Erfindung verdeutlichen ohne sie jedoch einzuschränken, insbesondere wird der Fachmann durch Variation der Menge und der Art der Metallionen und der Herstellungsbedingungen im Rahmen dieser Erfindung jede gewünschte Zusammensetzung mühelos erhalten können.

Beispiele

Beispiel 1

109 kg eines Filterkuchens eines feinteiligen Magnetits (48.56 % Feststoff) werden mit 15.17 kg Ba(NO₃)₂ (Hersteller Degussa AG, 52.5 % Ba) und 230 kg VE-Wasser in einem Vorlagekessel suspendiert. Diese Suspension wird 30 Minuten durch eine Durchlaufdispergiereinheit homogenisiert und dann mit einer Geschwindigkeit von 7 kg/h in einem Sprühtrockner eingepumpt. Die Temperatur im Sprühturm betrug hierbei 95-100°C. Das so erhaltene gut fließfähige Material wurde in einem rotierenden Ofen bei 900°C 1 h lang geglüht. Es entstand ein Bariumferrit mit folgenden Eigenschaften:

Koerzitivkraft (ᵢH_c): 5182 Oe = 412.3 kA/m
Spezifische Sättigungsmagnetisierung: 71.0 nTm³/g
Spezifische Remanenz 38.5 nTm³/g

Die magnetischen Eigenschaften wurden an einem Vibrationsmagnetometer bei 15 kOe 1193.55 kA/m Meßfeldstärke bestimmt.

Beispiel 2

635 kg eines Filterkuchens eines feinteiligen Magnetits (48.56 % Feststoff) werden mit 125.51 kg Ba(OH)₂*8H₂O (Hersteller Sachtleben GmbH 97 %ig) und 1746 kg VE-Wasser unter Begasung mit CO₂-freiem Stickstoff in einem Vorlagekessel suspendiert. Diese Suspension wird 60 Minuten mit einer Durchlaufdispergiereinheit homogenisiert und dann mit einer Geschwindigkeit von 20 kg/h in einem Sprühtrockner, der mit Stickstoff als Spülgas arbeitet, eingepumpt. Die Temperatur im Sprühturm betrug hierbei 95-100°C. Das so erhaltene gut fließfähige Material wurde in einem rotierenden Ofen bei 900°C 1 h lang geglüht. Es enstand ein Bariumferrit mit folgenden Eigenschaften:

Koerzitivkraft (ᵢH_c): 5475 Oe = 435.6 kA/m
Spezifische Sättigungsmagnetisierung: 66.5 nTm³/g
Spezifische Remanenz 36.2 nTm³/g

Die magnetischen Eigenschaften wurden an einem Vibrationsmagnetometer bei 15 kOe = 1193.55 kA/m Meßfeldstärke bestimmt.

Ansprüche

1. Verfahren zur Herstellung feinteiliger magnetischer Hexaferrite der allgemeinen Zusammensetzung:
$M(I)_{1-x}M(II)_yM(III)_zFe_{12-(y+z)}O_{19}$ wobei
$0 <= x <= 0,5$,   $0 <= (y+z) <= 3$,   $0 <= y <= 1.5$,
$0 <= z <= 1.5$ und $(x+y+z) >= 1.0$, wobei
M(I) = Ba, Sr, Ca, Eu, Pb oder eine Kombination von RE und einwertigen Kationen der Gruppe Li, Na, Rb, Cs, Ag, Tl und RE = La, Y, Sc, Bi oder andere Seltenerdmetalle ist und
M(II) = Fe(II), Mn, Co, Ni, Zn, Cu, Cd, Mg, Sn(II) und
M(III) = Ti, Zr, Hf, Ga, Sn(IV), Ge, In, Sc, Nb, Ta, V, As, Sb, Bi, Al, Cr(III), Mo, W
bedeuten, dadurch gekennzeichnet, daß der Hexaferrit durch Sprühtrocknen einer Mischung eines Bariumsalzes mit einem Eisenoxid und anschließendes Glühen hergestellt wird.

2. Verfahren zur Herstellung feinteiliger magnetischer Hexaferrite gemäß Anspruch 1 dadurch gekennzeichnet, daß als Eisenoxide Fällungsmagnetite verwendet werden.

3. Verfahren gemäß einem der Ansprüche 1 oder 2 dadurch gekennzeichnet, daß das Barium als Salz einer Säure, die wasserlöslischen Salze mit einer Löslichkeit von mehr als 2 Gew.-% in Wasser bei 100°C bildet, eingesetzt wird.

4. Verfahren gemäß einem oder mehrerer Ansprüche 1 bis 3, dadurch gekennzeichnet, daß als Eisenoxid ein mit den Metallen M(II) oder M(III) oder einer Kombination von Metallen der Gruppen M(II) und M(III) dotiertes Eisenoxid eingesetzt wird.

5. Verfahren gemäß einem oder mehrerer der Ansprüche 1 bis 4, dadurch gekennzeichnet, daß das Sprühtrocknen bei 100 bis 500°C Turmtemperatur vorgenommen wird.

6. Verwendung der magnetischen Hexaferritpigmente, gemäß einem der Ansprüche 1 bis 5 als magnetisches Aufzeichnungsmaterial.

7. Verwendung des magnetisches Hexaferritpigments, gemäß einem oder mehrerer der Ansprüche 1 bis 6, in Sicherheitsmarkierungen, Markierungen von Banknoten und Tickets.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 401 029 (GENERAL ELECTRIC) * Seite 3, Absatz 2; Seite 4, Absätze 2,3; Seite 8, Beispiel 2 - Seite 9, zweiter Absatz; Anspruch 1 * | 1,2 | G 11 B 5/706 C 01 G 49/00 C 01 G 51/00 |
| A | | 3-5 | |
| A | EP-A-0 164 533 (BASF) * Seite 5, letzter Absatz; Seite 7, Beispiel 1; Anspruch 7 * --- | 1-3,5,6 | |
| A | EP-A-0 072 436 (BASF) * Seite 8, letzter Absatz; Seite 21, Beispiel 5; Ansprüche 1,4 * ----- | 1-7 | |

**RECHERCHIERTE SACHGEBIETE (Int. Cl.5)**

G 11 B
C 01 G

Der vorliegende Recherchenbericht wurde für alle Patentansprüche erstellt

| Recherchenort | Abschlußdatum der Recherche | Prüfer |
|---|---|---|
| DEN HAAG | 27-02-1990 | KLOCKE S. |